# EUROPEAN PATENT APPLICATION

(11) **EP 2 832 439 A1**
(43) Date of publication of application: **04.02.2015**
(21) Application number: 13178904.2
(22) Date of filing: 01.08.2013
(51) Int. Cl.: B01J 8/38, B01J 19/02, C05C 9/00

(54) **Reactor for producing nitrogen-containing fertilizer granules**

(71) Applicant: Uhde Fertilizer Technology B.V., 6042 NW Roermond (NL)
(72) Inventor: Grulke, Andreas, 45259 Essen (DE); Potthoff, Matthias, 44265 Dortmund (DE); Kotte, Liliana, 01219 Dresden (DE); Althues, Holger, 01309 Dresden (DE); Kaskel, Stefan, 01159 Dresden (DE)
(74) Representative: Fabry, Bernd

(57) **Abstract**

Suggested is a reactor for producing nitrogen-containing fertilizer granules, wherein the inside walls of said reactor are coated with a layer of at least one organic silica compound.

## Description

### Field of invention

The invention is related to the area of fertilizers, in particular urea, and concerns a granulation reactor coated with at least one organic silica compound to prevent precipitation of fertilizer deposits, a process for coating hard surfaces, a method for preventing the precipitation of fertilizer deposits on hard surfaces and the use of organic silica compounds as coatings for hard surfaces.

### State of the art

Fertilizer is any organic or inorganic material of natural or synthetic origin that is added to a soil to supply one or more plant nutrients essential to the growth of plants. Fertilizers typically provide, in varying proportions, the six major macronutrients phosphor, potassium, calcium, magnesium, sulphur and in particular nitrogen. Sources for nitrogen can be of natural or synthetic origin; however the main nitrogen-containing fertilizers are ammonium salts, like ammonium nitrate, and in particular urea.

Methods related to the production of nitrogen-containing fertilizers in general and urea in particular are well known from the state of the art.

For example, EP 1 711 447 B1 (Uhde) discloses a method for producing a fertilizing agent containing urea, by means of synthesis step, an evaporation process, and a granulation unit. According to said method, a self-regulating centrifugal pump is used to reduce the dwell time and to optimise the positioning of the components of the method for transporting the product flow of the evaporation process to the granulation unit.

It is also well known to produce fertilize granules by granulation in a fluidized bed, as for example described in EP 0 289 074 B1 or US 3,372,019**.** This technology was developed in the mid-1970s by NSM Sluiskil. Typically, feed solution comprising up to 97 % b.w. urea is dispensed to the injection heads where it is finely atomized up into the bed of moving particles, assisted by air.

WO 2012 034650 A1 (Uhde) refers to a method for producing urea granules having low moisture absorption capacity, with a urea granulator, having a granule flow inlet side and oppositely a granule flow outlet side, forming an axis alongside which urea granules from a urea solution and a urea/ammonium salt-stream are formed, whereby the urea solution and the urea-ammonium salt-stream are sprayed as a mixture or separately via a feed system unit via various nozzles into the urea granulator onto a seed material.

During spray-granulation small particles forming the fluidized bed are layered by the fertilizer droplets to form granules showing increased diameter over the granulation pathway in the reactor. Since only a small window of particles showing a defined average diameter are desired, the fertilizer thus obtained are sieved and particles outside of the specification are returned - optionally after crushing in a mill - into the process.

A major drawback associated with the production of nitrogen-containing fertilizer granules in general and urea granules in particular is the fact that during granulation fertilizers show strong tendency to precipitate. The caking of dust deposits at the inner walls of the reactor leads to the effect that from time to time bigger parts of the deposit crumble from the surface contaminating the fluidized bed with increased amounts of thermal degradation products of urea such as for example biuret and particles with irregular and unwanted size and shape leading to a lower output of granules meeting the given specification. Dust deposits may also block the granulator outlet. As a result the reactor needs to be cooled down, discharged and cleaned in short terms. Obviously, this leads to increased maintenance and operational requirements.

The problem underlying the present invention has been to avoid the disadvantages from the state of the art as explained above. More particular it has been the object of the invention to provide a new reactor which avoids or reduces the formation of precipitation and caking products at the inside walls.

### Description of the invention

A first object of the present invention relates to a reactor for producing nitrogen-containing fertilizer granules, wherein the inside walls of said reactor are coated with a layer of at least one organic silica compound.

Surprisingly, it has been observed that methylpolysiloxanes represent excellent resins for coating various hard surfaces, in particular stainless steel, in order to avoid precipitation of fertilizer particles in general and urea in particular. Coatings having a thickness of few micrometres, which can be easily applied by spraying, lead to significantly less precipitation on the inside walls and extend the periods for discharging and cleaning of the reactors seriously. Another advantage of the specific coating is that the layer remains stable until 150 °C (peak temperature) and is in particular stable under constant operating conditions of about 110 °C.

A second object of the invention is related to a process for coating of hard surfaces, wherein a surface selected from steel, stainless steel, aluminium or alloys comprising iron and/or aluminium is treated with at least one methylpolysiloxane.

### Hard surfaces and reactor

Although the process might be applied to any suitable hard surface, such as for example steel, stainless steel, aluminium or alloys comprising iron and/or aluminium, the preferred embodiment of the present invention deals with the inside metal wall of a reactor. More preferably the reactor is a granulator containing a fluidized bed, which is for example useful for making fertilizer granules.

It is not necessary to coat the inner walls of the reactor in its entirety, but it is rather advantageous to coat at least the part of the inner walls above the fluidized bed zone, which is seriously exposed to the precipitation of deposits.

The fluidized bed contains small particles acting as nuclei or seeds for the fertilizer, in particular urea. Into this bed urea solution is sprayed through nozzles. Preferably, the flow direction of the seeds and the fertilizer droplets are in cross-current. The fertilizer solution typically shows a very low water content of less than 10, preferably less than 5 % b.w. and may contain auxiliary agents such as formaldehyde, urea formaldehyde, aluminium sulphate, magnesium sulphate, micronutrients and other hydrocarbon granulation additives.

The seed material needs to be chemically compatible with the produced fertilizer granules. In particular preferred are crushed oversized or undersized fertilizer granules which are produced by the process and recycled. The seed material has an optimum size if it is 20 to 80 %, preferably 40 to 80 % and especially 60 to 80 % smaller than the desired end product. Since it is desirous to form fertilizer granules with low moisture content, but high water binding capacity, it is preferred to choose the size of the seed as small as possible, in order to ensure a totally covered material with the fertilizer solution.

In a preferred embodiment the reactor includes an additional inlet for a second fertilizer compound, allowing to produce for example fertilizers comprising urea and an ammonium salt.

### Coating

The essence of the invention encompasses the surprising observation that organic silica compounds in general, more particular polysiloxanes and even more preferred methylpoly-siloxanes represent very effective coatings avoiding the precipitation and caking of nitrogen-containing fertilizers, particularly urea during the granulation process in the fluidized bed.

Examples of suitable organic silica compounds encompass oligomeric and polymeric hydrides with the radicals of the formulae H(OSiH₂)*ₙ*OH and (OSiH₂)ₙ. Polysiloxanes also include branched compounds, the defining feature being that each pair of silicon centres is separated by one oxygen atom. The siloxane functional group forms the backbone of silicones, the premier example of which is polydimethylsiloxane.

Although organic silica compounds in general are useful, methylpolysiloxanes in general exhibit excellent properties as coatings for hard surfaces, it is advantageous to select products which are sprayable showing a kinematic viscosity according to DIN 3679 of from about 10 to about 55 mm²/s, and preferably from about 20 to about 35 mm²/s.

It is also useful to select methylpolysiloxanes exhibiting flash points above about 60 °C, preferably above 65 °C, and ignition temperatures above 180 °C, preferably above 210 °C to make sure that the coatings remain stable under the process conditions.

It was found that the by far most effective resin is SILRES^{®} MSE 100 (Wacker Chemie), representing a methyl ester of a mixture of oligomeric methylsilicates, which are also described as methoxy-functionalized methylpolysiloxane resins.

For improved hardening said methylpolysiloxanes may include a polymerisation catalyst, which is typically an alkyl titanium compound, such as for example polydibutyltitanate. Suitable amounts are from about 1 to about 10 % b.w. and preferably from about 5 to about 8 % b.w. - calculated on the organic silica compounds.

Prior to the application of the organic silica compounds it is advantageous to clean the hard surface, for example by using degreasing agents like isopropyl alcohol and/or commercial cleaners comprising surface-active agents. It is also useful to subject the surface to sand blasting.

The coating can be applied to the hard surface by any suitable process, as for example bathing, dipping and in particular spraying. Suitable thicknesses of the coatings range from about 5 to about 100 µm, and in particular from about 15 to about 25 µm. Once the coating has been applied to the surface the reactor should be allowed to dry at ambient conditions, such as for example about 20 °C for about one day. It has been particular useful to introduce hot air into the reactor prior to the initial operation

### Industrial application

Another object of the present invention is related to a method for preventing a hard surface from precipitations of nitrogen-containing fertilizer deposits, in that said surface is coated with at least one organic silica compound and preferably a methylpolysiloxane. Preferably, said hard surface is the inside wall of a urea granulator and the fertilizer is urea.

Finally, the present invention also encompasses the use of at least one organic silica compound and preferably a methylpolysiloxane as a coating for hard surfaces against precipitation of nitrogen-containing fertilizer deposits.

### Examples

### General procedure for obtaining urea granules

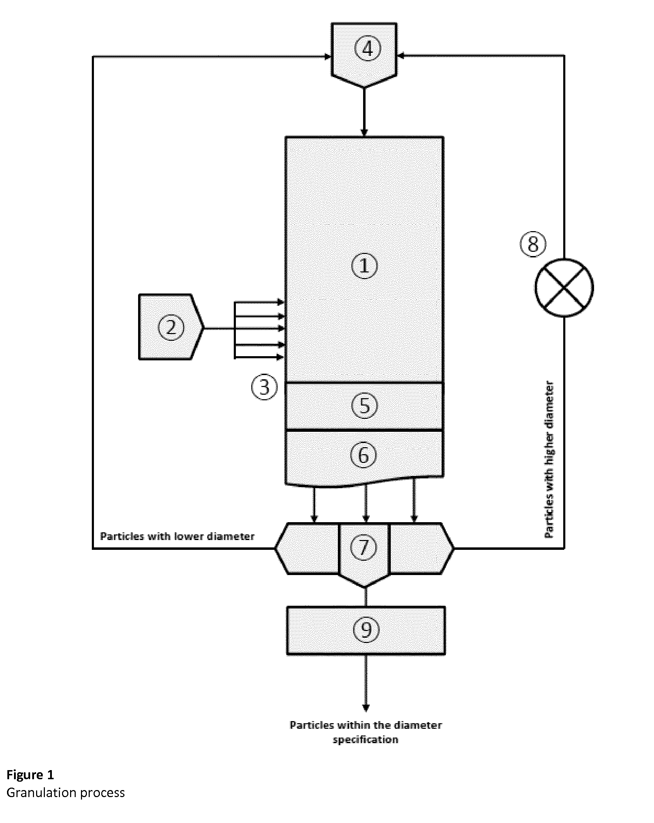

**Figure 1** shows equipment for granulation in a fluidized bed. The granulator **1** consists of a first feed **2** from which a first urea solution is distributed to spray nozzles **3** inside of the granulator. The urea solution is sprayed on solid urea particles which are introduced into the granulator via the granule inlet side **4** and forming a fluidized bed inside the granulator. The granules thus obtained are leaving the granulator via the granule outlet side **5** and are subjected to a first cooler **6** and subsequently to sieving fraction **7,** where granules having higher or lower average diameters - optionally after passing a crusher **8** - are returned to the flow inlet side **4,** while granules within the specified particle range are separated off passing a second cooler **9** as the desired end product.

### Example 1 and Comparative Example C1

In a first comparative trial the inside walls of a granulator made of stainless steel as described above were defatted using first isopropanol and then treated over 5 minutes with an industrial cleaner at 70 °C. Subsequently the walls were sandblasted. The granulation process was conducted for 2, 17 and 35 days respectively and after each period the walls were inspected in order to determine the amount of precipitation.

In an example according to the invention the inside walls of the same granulator were defatted, cleaned and sandblasted as described above. Subsequently, the plates were coated using a mixture of a methylpolysiloxane resin (Silers^{®} MSE 100, Wacker Chemie) and a polydibutyltitanate (Tyzor^{®} BTP) in a ratio by weight of 93:7 forming a film showing a thickness of on average 0.13 µm. The granulator was allowed to dry for 24 hours. Then the granulation process was conducted for 2, 17 and 35 days respectively and after each period the walls were inspected in order to determine the amount of precipitation.

The results are shown in Table 1.

**Table 1**

| Precipitation on granulator inside walls | | | |
|---|---|---|---|
| **Examples** | **Precipitation** | | |
| | **After 2 days** | **After 17 days** | **After 35 days** |
| Example C1 | First particles formed | Significant | Strong, cleaning required |
| Example 1 | None | None | Very few particles formed |

The results clearly demonstrate that coating the inside walls with methylpolysiloxanes leads to a significant decrease of precipitation allowing to run the process over a longer period without cleaning.

## Claims

1. Reactor for producing nitrogen-containing fertilizer granules, wherein the inside walls of said reactor are coated with a layer of at least one organic silica compound.

2. Process for coating of hard surfaces, wherein a surface selected from steel, stainless steel, aluminium or alloys comprising iron and/or aluminium are treated with at least one methylpolysiloxane.

3. Process according to Claim 2, wherein said hard surface is the inside wall of a reactor.

4. Process according to Claim 3, wherein said reactor is a granulator.

5. Process according to Claim 3, wherein said reactor contains a fluidized bed.

6. Process according to Claim 3, wherein said reactor is a granulator for making fertilizer granules.

7. Process according to Claim 6, wherein said fertilizer granules comprise or consist of urea.

8. Process according to Claim 2, wherein said organic silica compound is a methylpoly-siloxane.

9. Process according to Claim 2, wherein said organic silica compound contains a polymerisation catalyst.

10. Process according to Claim 9, wherein said catalyst is an alkyl titanium compound.

11. Process according to Claim 2, wherein said organic silica compound is applied to the hard surface in a coat thickness of about 5 to about 100 µm.

12. A method for preventing a hard surface from precipitations of nitrogen-containing fertilizer deposits, in that said surface is coated with at least one organic silica compound.

13. The method of Claim 12, wherein the hard surface is the inside wall of a urea granulator.

14. The method of Claim 12, wherein the fertilizer is urea.

15. Use of at least one organic silica compound as a coating for hard surfaces against precipitation of nitrogen-containing fertilizer deposits.
